# EUROPÄISCHE PATENTSCHRIFT

(11) **EP 1 649 375 B1**
(45) Veröffentlichungstag und Bekanntmachung des Hinweises auf die Patenterteilung: **05.09.2007**
(21) Anmeldenummer: 04766250.7
(22) Anmeldetag: 16.07.2004
(51) Int. Cl.: G06F 11/25

(54) **VERFAHREN UND SYSTEM ZUM VALIDIEREN VON FEHLERSYMPTOMEN**
METHOD AND SYSTEM FOR VALIDATING FAULT SYMPTOMS
PROCEDE ET SYSTEME POUR VALIDER DES SYMPTOMES DE DEFAUTS

(30) Priorität: 31.07.2003 DE 10335151
(43) Veröffentlichungstag der Anmeldung: 26.04.2006
(73) Patentinhaber: SIEMENS AKTIENGESELLSCHAFT, 80333 München (DE)
(72) Erfinder: THIVEOS, Konstantin, 82418 Murnau (DE)
(86) Internationale Anmeldenummer: PCT/EP2004/051528
(87) Internationale Veröffentlichungsnummer: WO 2005/013132

(56) Entgegenhaltungen:
- US-A- 5 937 366
- PATENT ABSTRACTS OF JAPAN Bd. 014, Nr. 199 (P-1040), 23. April 1990 (1990-04-23) & JP 02 039397 A (NEC CORP), 8. Februar 1990 (1990-02-08)

## Beschreibung

Die Erfindung betrifft ein Verfahren zum Validieren von an Treiberausgängen auftretenden Fehlersymptomen.

Die Erfindung betrifft weiterhin ein System zum Validieren von an Treiberausgängen auftretenden Fehlersymptomen.

Es ist bekannt, Endstufentreiberausgänge im Rahmen einer Fehlerdiagnose beim Betrieb eines Kraftfahrzeugs zu überwachen. Dabei können Schaltzustände auftreten, bei denen Fehlersymptome nicht oder nicht eindeutig erkannt werden. Für diese Fehlersymptome wird im Allgemeinen eine Validierungsroutine ausgeführt, um so die Gültigkeit des gemeldeten Fehlersymptoms zu überprüfen. Auf diese Weise soll beispielsweise sichergestellt werden, dass ein aufgrund gültiger Fehlersymptome inkrementierter Fehlerzähler nicht dadurch wieder dekrementiert wird, dass eine unvalidierte Information berücksichtigt wird, die besagt, der Fehler läge nun nicht mehr vor.

Das Durchführen derartiger Validierungsroutinen ist mit einem hohen Rechenaufwand verbunden. Dieser Aufwand kann unter Umständen unangemessen sein, wenn es beispielsweise nur darum geht, einen Fehlerzähler bei einem gewissen Zählerstand einzufrieren.

Die US 5,937,366 betrifft ein Diagnosesystem, das geeignet ist, Fehlerdaten auf der Grundlage mathematischer Modelle zu klassifizieren.

Der Erfindung liegt die Aufgabe zugrunde, ein Verfahren und ein System zur Verfügung zu stellen, die das Durchführen einer Validierungsroutine für ein nicht oder ein nicht eindeutig erkanntes Symptom in vielen Fällen überflüssig machen.

Diese Aufgabe wird mit den Merkmalen der unabhängigen Ansprüche gelöst.

Vorteilhafte Ausführungsformen der Erfindung sind in den abhängigen Ansprüchen angegeben.

Das erfindungsgemäße Verfahren zum Validieren von an Treiberausgängen auftretenden Fehlersymptomen umfasst die Schritte: Erfassen eines an einem Treiberausgang vorliegenden Symptoms und Klassifizieren des Symptoms in eine von mehreren Klassen unterschiedlicher Symptome mittels einer Symptomerkennungseinheit; Zuordnen einer Symptomvalidierungsinformation zu dem Symptom in Abhängigkeit der Klassifizierung mittels einer Symptomvalidierungseinheit; Anzeigen der Klassifizierung beziehungsweise einer der Klassifizierung zugeordneten Anzeigeinformation; und Anzeigen der Symptomvalidierungsinformation. Auf der Grundlage dieses Verfahrens ist es möglich, eine Symptomvalidierung allein auf der Grundlage einer Klassifizierung von Fehlersymptomen vorzunehmen. Eine derartige Validierung ist in vielen Fällen ausreichend, oder sie kann als Vorvalidierung vor der Durchführung weiterer Validierungsmaßnahmen herangezogen werden.

Insbesondere ist nützlich, dass zur Klassifizierung eines Symptoms mindestens vier Klassen zur Verfügung stehen, wobei ein eindeutig erkennbarer elektrischer Fehler als ein Symptom einer Klasse 1 klassifiziert wird, ein nicht eindeutig erkennbarer elektrischer Fehler als ein Symptom einer Klasse 2 klassifiziert wird, ein Symptom als einer Klasse 3 zugehörig klassifiziert wird, wenn eindeutig erkennbar ist, dass kein elektrischer Fehler vorliegt, und ein Symptom als einer Klasse 4 zugehörig klassifiziert wird, wenn kein elektrischer Fehler vorliegt, dies aber nicht eindeutig erkennbar ist. Eine solche Klassifizierung bietet eine ausreichende Grundlage für die erfindungsgemäße Symptomvalidierung. In diesem Sinne kann jeder der Klassen 1 bis 4 eindeutig eine Validierungsinformation zugeordnet werden.

Dabei ist insbesondere vorgesehen, dass bei einer Klassifizierung eines Fehlersymptoms als der Klasse 1 zugehörig dem Fehlersymptom die Validierungsinformation "gültig" zugeordnet wird und die Klassifizierung sowie die Validierungsinformation angezeigt werden. Ein Fehlersymptom der Klasse 1 ist ein elektrischer Fehler, der eindeutig erkennbar ist. Solche Fehlersymptome erhalten stets die Validierungsinformation "gültig" und können somit beispielweise die Voraussetzung für die Inkrementierung eines Fehlerzählers bilden.

Ebenfalls ist nützlicherweise vorgesehen, dass bei einer Klassifizierung eines Fehlersymptoms als der Klasse 3 zugehörig dem Fehlersymptom die Validierungsinformation "gültig" zugeordnet wird und die Klassifizierung sowie die Validierungsinformation angezeigt werden. Die Klassifizierung in Klasse 3 gibt an, dass kein elektrischer Fehler vorliegt und dass dies eindeutig erkennbar ist. Es kann die Validierungsinformation "gültig" zugeordnet werden.

In diesem Sinne ist weiterhin in bevorzugter Weise vorgesehen, dass bei einer Klassifizierung eines Fehlersymptoms als der Klasse 2 oder der Klasse 4 zugehörig dem Fehlersymptom die Validierungsinformation "ungültig" zugeordnet wird und als Klassifizierung die Klasse 3 und die Validierungsinformation angezeigt werden. Die Fehlersymptome der Klasse 2, das heißt elektrische Fehler, die nicht eindeutig erkennbar sind, oder der Klasse 4, das heißt nicht vorliegende Fehler, wobei dies aber nicht eindeutig erkennbar ist, werden folglich mit der Validierungsinformation "ungültig" versehen, und es wird pauschal angezeigt, dass ein Fehlersymptom der Klasse 3 vorliegt.

In diesem Zusammenhang kann nützlich sein, dass bei einer Validierungsinformation "ungültig" die Möglichkeit besteht, den betreffenden Treiberausgang von der Symptomvalidierungseinheit beeinflussen zu lassen, um zusätzliche Informationen über das betreffende Fehlersymptom zu erlangen. Auch wenn die Zuordnung der Validierungsinformation "ungültig" zu den Fehlersymptomen der Klasse 2 und der Klasse 4 ausreichend ist, um beispielsweise eine Dekrementierung eines Fehlerzählers beim Vorliegen eines Fehlersymptoms der Klasse 4 zu vermeiden, kann es erwünscht sein, weitere Informationen über den Fehler zu erhalten. In diesem Fall kann die Symptomvalidierungseinheit beispielsweise von außerhalb der Endstufe angeordneten Systemkomponenten veranlasst werden, Pulse an die Endstufenausgänge zu liefern, um auf dieser Grundlage eine weitere Diagnose der Endstufenausgänge vornehmen zu können.

Die Erfindung betrifft weiterhin ein System mit einer Endstufe und einer der Endstufe zugeordneten Symptomanzeigeeinheit, wobei die Endstufe eine Symptomerkennungseinheit, eine Symptomvalidierungseinheit und eine Symptomausgabeeinheit aufweist, mittels der Symptomerkennungseinheit an einem Treiberausgang vorliegende Symptome erfasst und jeweils in eine von mehreren Klassen unterschiedlicher Symptome klassifiziert werden können, mittels der Symptomvalidierungseinheit eine Symptomvalidierungsinformation zu einem Symptom in Abhängigkeit der Klassifizierung zugeordnet werden kann, mittels der Systemausgabeeinheit die Klassifizierung und die Validierungsinformation an die Symptomanzeigeeinheit übermittelt werden kann und von der Symptomanzeigeeinheit die Klassifizierung beziehungsweise eine der Klassifizierung zugeordnete Anzeigeinformation und die Symptomvalidierungsinformation angezeigt werden. Auf diese Weise werden die Vorteile und Besonderheiten des erfindungsgemäßen Verfahrens auch im Rahmen eines Systems umgesetzt. Dies gilt auch für die nachfolgend angegebenen besonders bevorzugten Ausführungsformen des erfindungsgemäßen Systems.

Dieses ist in nützlicher Weise dadurch weitergebildet, dass zur Klassifizierung eines Symptoms mindestens vier Klassen zur Verfügung stehen, wobei ein eindeutig erkennbarer elektrischer Fehler als ein Symptom einer Klasse 1 klassifiziert wird, ein nicht eindeutig erkennbarer elektrischer Fehler als ein Symptom einer Klasse 2 klassifiziert wird, ein Symptom als einer Klasse 3 zugehörig klassifiziert wird, wenn eindeutig erkennbar ist, dass kein elektrischer Fehler vorliegt, und ein Symptom als einer Klasse 4 zugehörig klassifiziert wird, wenn kein elektrischer Fehler vorliegt, dies aber nicht eindeutig erkennbar ist.

Weiterhin ist vorgesehen, dass bei einer Klassifizierung eines Fehlersymptoms als der Klasse 1 zugehörig dem Fehlersymptom die Validierungsinformation "gültig" zugeordnet wird und die Klassifizierung sowie die Validierungsinformation angezeigt werden.

Das erfindungsgemäße System ist in besonders bevorzugter Weise dadurch weitergebildet, dass bei einer Klassifizierung eines Fehlersymptoms als der Klasse 3 zugehörig dem Fehlersymptom die Validierungsinformation "gültig" zugeordnet wird und die Klassifizierung sowie die Validierungsinformation angezeigt werden.

Es ist weiterhin von besonderem Vorteil, dass bei einer Klassifizierung eines Fehlersymptoms als der Klasse 2 oder der Klasse 4 zugehörig dem Fehlersymptom die Validierungsinformation "ungültig" zugeordnet wird und als Klassifizierung die Klasse 3 und die Validierungsinformation angezeigt werden.

Ebenfalls ist im Rahmen des erfindungsgemäßen Systems nützlicherweise vorgesehen, dass bei einer Validierungsinformation "ungültig" die Möglichkeit besteht, den betreffenden Treiberausgang von der Symptomvalidierungseinheit beeinflussen zu lassen, um zusätzliche Informationen über das betreffende Fehlersymptom zu erlangen.

Der Erfindung liegt die Erkenntnis zugrunde, dass eine der Endstufe zugeordnete Symptomvalidierungseinheit, die auf der Grundlage einer Klassifizierung von Fehlern arbeitet, die Durchführung von Validierungsroutinen für nicht oder nicht eindeutig erkannte Fehlersymptome im Hinblick auf bestimmte Aufgaben entbehrlich macht.

Die Erfindung wird nun mit Bezug auf die begleitenden Zeichnungen anhand bevorzugter Ausführungsformen beispielhaft erläutert.

Dabei zeigt:
- Figur 1: eine schematische Darstellung eines erfindungsgemäßen Systems; und
- Figur 2: ein Flussdiagramm eines erfindungsgemäßen Verfahrens.

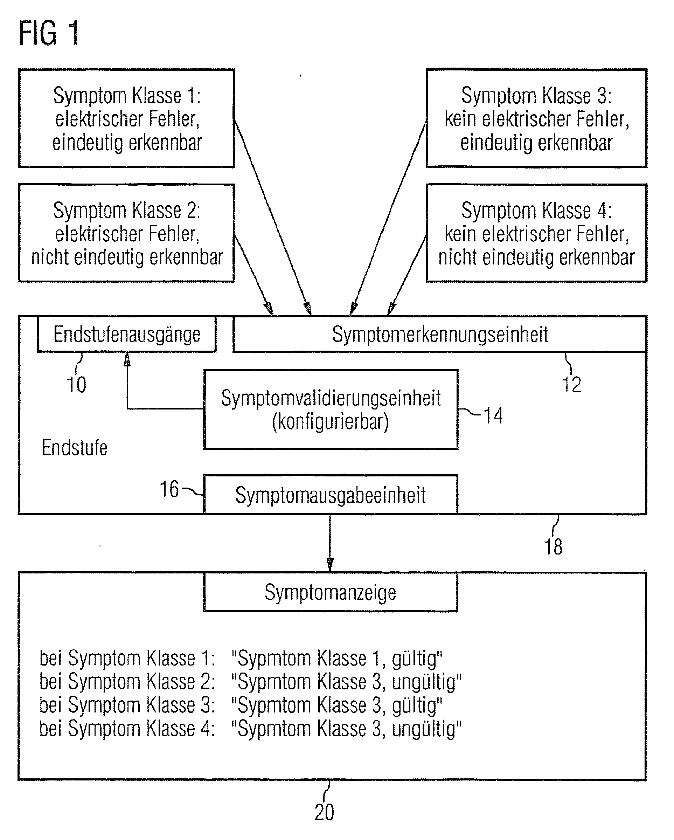

Figur 1 zeigt eine schematische Darstellung eines erfindungsgemäßen Systems. Es können Symptome verschiedener Klassen vorliegen. Symptome der Klasse 1 beruhen auf elektrischen Fehlern, die eindeutig erkennbar sind. Symptome der Klasse 2 beruhen auf elektrischen Fehlern, die nicht eindeutig erkennbar sind. Bei Symptomen der Klasse 3 ist eindeutig erkennbar, dass kein elektrischer Fehler vorliegt. Bei Symptomen der Klasse 4 liegt kein elektrischer Fehler vor, dies ist aber nicht eindeutig erkennbar. Eine einer Endstufe 18 zugeordnete Symptomerkennungseinheit 12 erfasst die an den Endstufenausgängen 10 vorliegenden Symptome und klassifiziert sie unter Zuordnung in die aufgezählten Klassen 1 bis 4. Auf der Grundlage dieser Klassifizierung nimmt eine Symptomvalidierungseinheit 14 eine Zuordnung einer Symptomvalidierungsinformation vor. Die somit vorliegenden Informationen werden von einer Symptomausgabeeinheit 16 an eine Symptomanzeige 20 ausgegeben. Die Symptomanzeige gibt bei einem Symptom der Klasse 1 aus, dass das Symptom der Klasse 1 zugehörig ist und die Validierungsinformation "gültig" trägt. Bei einem Symptom der Klasse 2 wird ausgegeben, dass das Symptom der Klasse 3 zugehörig ist und "ungültig" ist. Beim Vorliegen eines Symptoms der Klasse 3 wird angezeigt, dass das Symptom der Klasse 3 zugehörig ist und "gültig" ist. Beim Vorliegen eines Symptoms der Klasse 4 wird von der Symptomanzeige 20 angegeben, dass das Symptom der Klasse 3 zugehörig und "ungültig" ist. Gegebenenfalls kann zusätzlich zu der somit vorliegenden Validierung die Symptomvalidierungseinheit 14 veranlasst werden, die Endstufenausgänge 10 mit Pulsen zu beaufschlagen, so dass eine weitere Diagnose der Endstufenausgänge erfolgen kann, insbesondere im Hinblick auf Symptome der Klassen 2 und 4. Die Symptomvalidierungseinheit 14 kann konfigurierbar gestaltet sein, um im Hinblick auf diese Beeinflussung der Endstufenausgänge 10 verschiedene Spielarten zuzulassen. Beispielsweise kann vorgesehen sein, dass die Symptomvalidierungseinheit 14 von sich aus eine Beeinflussung der Endstufenausgänge vornimmt. Es kann auch vorgesehen sein, dass andere Systemkomponenten die Symptomvalidierungseinheit 14 veranlassen, Impulse an die Endstufenausgänge 10 zu liefern. Um verschiedene dieser Varianten zuzulassen, ist eine Konfigurierbarkeit der Symptomvalidierungseinheit 14, die vorzugsweise in Hardware realisiert ist, von Nutzen.

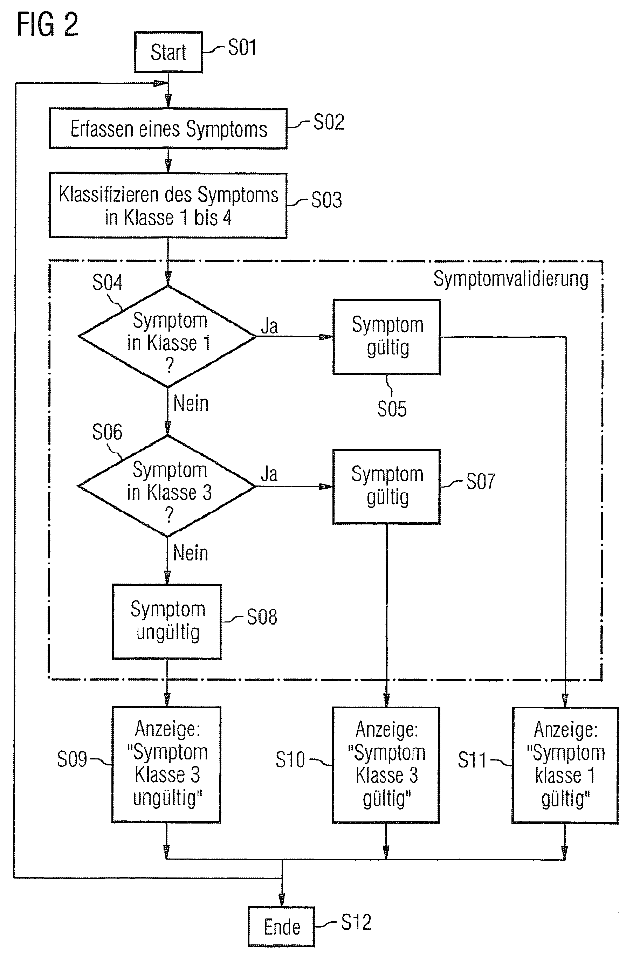

Figur 2 zeigt ein Flussdiagramm eines erfindungsgemäßen Verfahrens. Nach dem Start des Verfahrens in Schritt S01 wird in Schritt S02 ein Symptom an einem Endstufenausgang einer Endstufe durch die Symptomerkennungseinheit erfasst. In Schritt S03 wird das Symptom als einer der Klassen 1 bis 4 zugehörig klassifiziert. In Schritt S04 wird im Rahmen der Symptomvalidierung gefragt, ob ein Symptom der Klasse 1 vorliegt. Ist dies der Fall, so wird dem Symptom in Schritt S05 die Validierungsinformation "gültig" zugeordnet. Liegt kein Symptomder Klasse 1 vor, so wird in Schritt S06 gefragt, ob ein Symptom der Klasse 3 vorliegt. Ist dies der Fall, so wird in Schritt S07 dem Symptom wiederum die Validierungsinformation "gültig" zugeordnet. Wird in Schritt S06 ermittelt, dass kein Symptom der Klasse 3 vorliegt, so hat sich an dieser Stelle des Verfahrensablaufs gezeigt, dass ein Symptom der Klasse 2 oder der Klasse 4 vorliegt, so dass in Schritt SO8 dem Symptom sofort die Validierungsinformation "ungültig" zugeordnet werden kann. Nach der Symptomvalidierung findet eine im vorliegenden Ablaufdiagramm nicht dargestellte Übergabe der ermittelten Informationen an eine Symptomanzeige statt, so dass im Anschluss an Schritt S08 die Anzeige "Symptom Klasse 3, ungültig" gemäß Schritt S09 erfolgt. Im Anschluss an Schritt S07 erfolgt die Anzeige "Symptom Klasse 3, gültig" gemäß Schritt S10, und im Anschluss an Schritt S05 erfolgt die Anzeige "Symptom Klasse 1, gültig" gemäß Schritt S11. Durch Rückkehr zur Symptomerfassung im Schritt S02 kann ein erneuter Ablauf des erfindungsgemäßen Verfahrens erfolgen, beziehungsweise das Verfahren kann in Schritt S12 enden.

Die Erfindung lässt sich wie folgt zusammenfassen: Zur Validierung von an Treiberausgängen 10 auftretenden Fehlersymptomen ist eine Symptomvalidierungseinheit 14 innerhalb einer Endstufe 18 vorgesehen, die eine Validierung beziehungsweise eine vorläufige Validierung auf der Grundlage einer Klassifizierung von Symptomen vornimmt. Durch Zuordnen der Validierungsinformation "ungültig" zu nicht eindeutig erkennbaren Symptomen lässt sich die weitere Berücksichtigung der Symptome unterdrücken, beziehungsweise es lassen sich weitere Diagnosen des betreffenden Endstufenausgangs 10 in die Wege leiten.

## Patentansprüche

1. Verfahren zum Zuordnen der Information "gültig" oder "ungültig" zu an Treiberausgängen (10) auftretenden Fehlersymptomen, das heißt zum Validieren von an Treiberausgängen (10) auftretenden Fehlersymptomen, mit den Schritten:
- Erfassen eines an einem Treiberausgang (10) vorliegenden Symptoms und Klassifizieren des Symptoms in eine von mehreren Klassen unterschiedlicher Symptome mittels einer Symptomerkennungseinheit (12),
- Zuordnen einer Information "gültig" oder "ungültig"; das heißt einer Symptomvalidierungsinformation, zu dem Symptom in Abhängigkeit der Klassifizierung mittels einer Symptomvalidierungseinheit (14),
- im Falle der zugeordneten Information "gültig", Anzeigen der Klassifizierung, oder, im Falle der zugeordneten Information "ungültig", Anzeigen einer der Klassifizierung zugeordneten Anzeigeinformation und
- Anzeigen der Symptomvalidierungsinformation.

2. Verfahren nach Anspruch 1,
**dadurch gekennzeichnet,**
**dass** zur Klassifizierung eines Symptoms mindestens vier Klassen zur Verfügung stehen, wobei
- ein eindeutig erkennbarer elektrischer Fehler als ein Symptom einer Klasse 1 klassifiziert wird,
- ein nicht eindeutig erkennbarer elektrischer Fehler als ein Symptom einer Klasse 2 klassifiziert wird,
- ein Symptom als einer Klasse 3 zugehörig klassifiziert wird, wenn eindeutig erkennbar ist, dass kein elektrischer Fehler vorliegt, und
- ein Symptom als einer Klasse 4 zugehörig klassifiziert wird, wenn kein elektrischer Fehler vorzuliegen scheint, dies aber nicht eindeutig erkennbar ist.

3. Verfahren nach Anspruch 2,
**dadurch gekennzeichnet,**
**dass** bei einer Klassifizierung eines Fehlersymptoms als der Klasse 1 zugehörig dem Fehlersymptom die Symptomvalidierungsinformation "gültig" zugeordnet wird.

4. Verfahren nach Anspruch 2 oder 3,
**dadurch gekennzeichnet,**
**dass** bei einer Klassifizierung eines Fehlersymptoms als der Klasse 3 zugehörig dem Fehlersymptom die Symptomvalidierungsinformation "gültig" zugeordnet wird.

5. Verfahren nach einem der Ansprüche 2 bis 4,
**dadurch gekennzeichnet,**
**dass** bei einer Klassifizierung eines Fehlersymptoms als der Klasse 2 oder der Klasse 4 zugehörig dem Fehlersymptom die Symptomvalidierungsinformation "ungültig" zugeordnet wird und als der Klassifizierung zugeordnete Anzeigeinformation die Klasse 3 angezeigt wird.

6. Verfahren nach einem der Ansprüche 2 bis 5,
**dadurch gekennzeichnet,**
**dass** bei einer Symptomvalidierungsinformation "ungültig" der betreffende Treiberausgang (10) von der Symptomvalidierungseinheit (14) beeinflusst wird, um zusätzliche Informationen über das betreffende Fehlersymptom zu erlangen.

7. System zum Zuordnen der Information "gültig" oder "ungültig" zu an Treiberausgängen (10) auftretenden Fehlersymptomen, das heißt zum Validieren von an Treiberausgängen (10) auftretenden Fehlersymptomen, mit einer Endstufe (18) und einer der Endstufe (18) zugeordneten Symptomanzeigeeinheit (20), wobei
- die Endstufe (18) eine Symptomerkennungseinheit (12), eine Symptomvalidierungseinheit (14) und eine Symptomausgabeeinheit (16) aufweist,
- mittels der Symptomerkennungseinheit (12) an einem Treiberausgang (10) vorliegende Symptome erfasst und jeweils in eine von mehreren Klassen unterschiedlicher Symptome klassifiziert werden können,
- mittels der Symptomvalidierungseinheit (14) eine Information "gültig" oder "ungültig", das heißt eine Symptomvalidierungsinformation, einem Symptom in Abhängigkeit der Klassifizierung zugeordnet werden kann,
- mittels der Systemausgabeeinheit (16) die Klassifizierung und die Symptomvalidierungsinformation an die Symptomanzeigeeinheit (20) übermittelt werden kann und
- von der Symptomanzeigeeinheit (20), im Falle der zugeordneten Information "gültig", die Klassifizierung und die Symptomvalidierungsinformation, oder, im Falle der zugeordneten Informationen "ungültig", eine der Klassifizierung zugeordnete Anzeigeinformation und die Symptomvalidierungsinformation angezeigt werden.

8. System nach Anspruch 7,
**dadurch gekennzeichnet,**
**dass** zur Klassifizierung eines Symptoms mindestens vier Klassen zur Verfügung stehen, wobei
- ein eindeutig erkennbarer elektrischer Fehler als ein Symptom einer Klasse 1 klassifiziert wird,
- ein nicht eindeutig erkennbarer elektrischer Fehler als ein Symptom einer Klasse 2 klassifiziert wird,
- ein Symptom als einer Klasse 3 zugehörig klassifiziert wird, wenn eindeutig erkennbar ist, dass kein elektrischer Fehler vorliegt, und
- ein Symptom als einer Klasse 4 zugehörig klassifiziert wird, wenn kein elektrischer Fehler vorzuliegen scheint, dies aber nicht eindeutig erkennbar ist.

9. System nach Anspruch 8,
**dadurch gekennzeichnet,**
**dass** einem in die Klassel Klassifizierten Fehlersymptom die Symptomvalidierungsinformation "gültig" zugeordnet ist.

10. System nach Anspruch 8 oder 9,
**dadurch gekennzeichnet,**
**dass** bei einer Klassifizierung eines Fehlersymptoms als der Klasse 3 zugehörig dem Fehlersymptom die Symptomvalidierungsinformation "gültig" zugeordnet wird.

11. System nach einem der Ansprüche 8 bis 10,
**dadurch gekennzeichnet,**
**dass** einem in die Klasse 2 oder der Klasse 4 klassifizierten Fehlersymptom die Symptomvalidierungsinformation "ungültig" zugeordnet ist und als der Klassifizierung zugeordnete Anzeigeinformation die Klasse 3 angezeigt ist.

12. System nach einem der Ansprüche 8 bis 11,
**dadurch gekennzeichnet,**
**dass** bei einer Symptomvalidierungsinformation "ungültig" die Möglichkeit besteht, den betreffenden Treiberausgang (10) von der Symptomvalidierungiseinheit (14) beeinflussen zu lassen, um zusätzliche Informationen über das betreffende Fehlersymptom zu erlangen.

## Claims

1. Method for assigning the item of data "valid" or "invalid" to fault symptoms appearing at driver outputs (10), that is, for validating fault symptoms appearing at driver outputs (10), having the steps:
- record a symptom, present at a driver output (10), and classify the symptom into one of several classes of different symptoms by means of a symptom recognition unit (12),
- by means of a symptom validation unit (14), assign to the symptom the item of data "valid" or "invalid", that is, an item of symptom validation data which depends on the classification,
- in the case where the assigned item of data is "valid", report the classification or, in the case where the assigned item of data is "invalid", report an item of reporting data assigned to the classification and
- report the item of symptom validation data.

2. Method according to claim 1,
**characterised in that**
for the purpose of classifying a symptom at least four classes are available, whereby
- an electrical fault which is unambiguously identifiable is classified as a symptom in class 1,
- an electrical fault which is not unambiguously identifiable is classified as a symptom in class 2,
- a symptom is classified as belonging to class 3 if it can be unambiguously identified that no electrical fault is present, and
- a symptom is classified as belonging to class 4 if no electrical fault appears to be present, but this cannot be unambiguously identified.

3. Method according to claim 2,
**characterised in that**
in the case where a fault symptom is classified as belonging to class 1, the item of symptom validation data "valid" is assigned to the fault symptom.

4. Method according to claim 2 or 3,
**characterised in that**
in the case where a fault symptom is classified as belonging to class 3 the item of symptom validation data "valid" is assigned to the fault symptom.

5. Method according to one of the claims 2 to 4,
**characterised in that**
in the case where a fault symptom is classified as belonging to class 2 or class 4 the item of symptom validation data "invalid" is assigned to the fault symptom and class 3 is reported as the reporting data assigned to the classification.

6. Method according to one of the claims 2 to 5,
**characterised in that**
when the item of symptom validation data is "invalid", the driver output (10) concerned is influenced by the symptom validation unit (14) in order to get at additional data about the fault symptom concerned.

7. System for assigning the item of data "valid" or
"invalid" to fault symptoms appearing at driver outputs (10), that is, for validating fault symptoms appearing at driver outputs (10), with a final stage (18) and a symptom reporting unit (20) which is assigned to the final stage (18), where
- the final stage (18) has a symptom recognition unit (12), a symptom validation unit (14) and a symptom output unit (16),
- by means of the symptom recognition unit (12) symptoms present at a driver output (10) can be recorded and each classified into one of several classes of different symptoms,
- by means of the symptom validation unit (14) an item of data which is "valid" or "invalid", that is an item of symptom validation data, can be assigned to a symptom as a function of the classification,
- by means of the system output unit (16) the classification and the item of symptom validation data can be communicated to the symptom reporting unit (20) and
- the symptom reporting unit (20) reports the classification and the item of symptom validation data in the case when the assigned item of data is "valid", or an item of reporting data assigned to the classification and the item of symptom validation data in the case when the assigned item of data is "invalid".

8. System according to claim 7,
**characterised in that**
for the purpose of classifying a symptom at least four classes are available, whereby
- an electrical fault which is unambiguously identifiable is classified as a symptom in class 1,
- an electrical fault which is not unambiguously identifiable is classified as a symptom in class 2,
- a symptom is classified as belonging to class 3 if it can be unambiguously identified that no electrical fault is present, and
- a symptom is classified as belonging to class 4 if no electrical fault is present, but this cannot be unambiguously identified.

9. System according to claim 8,
**characterised in that**
the item of symptom validation data "valid" is assigned to a fault symptom classified in class 1.

10. System according to claim 8 or 9,
**characterised in that**
in the case where a fault symptom is classified as belonging to class 3 the item of symptom validation data "valid" is assigned to the fault symptom.

11. System according to one of the claims 8 to 10,
**characterised in that**
the item of symptom validation data "invalid" is assigned to a fault symptom classified as belonging to class 2 or class 4 and class 3 is reported to the reporting information assigned to the classification.

12. System according to one of the claims 8 to 11,
**characterised in that**
the possibility exists, when the item of validation data is "invalid", for getting the symptom validation unit (14) to subject the driver output (10) concerned to an influence in order to get at additional data about the fault symptom concerned.

## Revendications

1. Procédé pour l'association de l'information "valide" ou "invalide" à des symptômes de défauts apparaissant sur des sorties de circuits d'excitation (10), c'est-à-dire pour la validation des symptômes de défauts apparaissant sur des sorties de circuits d'excitation (10), comprenant les étapes :
- détection d'un symptôme présent sur une sortie du circuit d'excitation (10) et classification du symptôme dans l'une parmi plusieurs classes de différents symptômes, au moyen d'une unité d'identification des symptômes (12),
- association des informations "valide" ou "invalide"; c'est-à-dire d'une information de validation du symptôme, au symptôme, en fonction de la
classification, au moyen d'une unité de validation des symptômes (14),
- dans le cas de l'information associée "valide", affichage de la classification, ou dans le cas de l'information associée "invalide", affichage d'une information d'affichage associée à la classification, et
- affichage de l'information de validation du symptôme.

2. Procédé selon la revendication 1, **caractérisé en ce que** au moins quatre classes sont disponibles pour la classification d'un symptôme,
- un défaut électrique indubitablement identifiable étant classifié comme un symptôme de la classe 1,
- un défaut électrique qui n'est pas indubitablement identifiable étant classifié comme un symptôme de la classe 2,
- un symptôme étant classifié comme appartenant à la classe 3, s'il est indubitablement identifiable qu'aucun défaut électrique ne se présente, et
- un symptôme étant classifié comme appartenant à la classe 4, si aucun défaut électrique ne paraît se présenter, mais que ce fait n'est pas indubitablement identifiable.

3. Procédé selon la revendication 2, **caractérisé en ce que** lors d'une classification d'un symptôme de défaut comme appartenant à la classe 1, l'information de validation du symptôme "valide" est associée au symptôme de défaut.

4. Procédé selon la revendication 2 ou 3, **caractérisé en ce que** lors d'une classification d'un symptôme de défaut comme appartenant à la classe 3, l'information de validation du symptôme "valide" est associée au symptôme de défaut,

5. Procédé selon l'une quelconque des revendications 2 à 4, **caractérisé en ce que** lors d'une classification d'un symptôme de défaut comme appartenant à la classe 2 ou à la classe 4, l'information de validation du symptôme "invalide" est associée au symptôme de défaut et "classe 3" est affiché en tant qu'information d'affichage associée à la classification.

6. Procédé selon l'une quelconque des revendications 2 à 5, **caractérisé en ce que** lors d'une information de validation du symptôme "invalide", la sortie du circuit d'excitation (10) concernée est influencée par l'unité de validation des symptômes (14), pour obtenir des informations supplémentaires au sujet du symptôme de défaut concerné.

7. Système pour l'association de l'information "valide" ou "invalide" à des symptômes de défauts apparaissant sur des sorties de circuits d'excitation (10), c'est-à-dire pour la validation des symptômes de défauts apparaissant sur des sorties de circuits d'excitation (10), avec un étage final (18) et une unité d'affichage des symptômes (20) associée à l'étage final (18),
- l'étage final (18) comportant une unité d'identification des symptômes (12), une unité de validation des symptômes (14) et une unité d'édition des symptômes (16),
- au moyen d'une unité d'identification des symptômes (12), des symptômes présents sur une sortie de circuit d'excitation (10) pouvant être détectés et respectivement classifiés dans l'une parmi plusieurs classes de différents symptômes,
- au moyen de l'unité de validation des symptômes (14), une information "valide" ou "invalide"; c'est-à-dire d'une information de validation du symptôme, pouvant être associée au symptôme, en fonction de la classification,
- au moyen de l'unité d'édition du système (16), la classification et l'information de validation du symptôme pouvant être transmises à l'unité d'affichage des symptômes (20), et
- dans le cas de l'information associée "valide", l'unité d'affichage des symptômes (20) pouvant afficher la classification et l'information de validation du symptôme, ou dans le cas de l'information associée "invalide", une information d'affichage associée à la classification et l'information de validation du symptôme.

8. Système selon la revendication 7, **caractérisé en ce que** au moins quatre classes sont disponibles pour la classification d'un symptôme,
- un défaut électrique indubitablement identifiable étant classifié comme un symptôme de la classe 1,
- un défaut électrique qui n'est pas indubitablement identifiable étant classifié comme un symptôme de la classe 2,
- un défaut électrique étant classifié comme un symptôme de la classe 3, s'il est indubitablement identifiable qu'aucun défaut électrique ne se présente, et
- un symptôme étant classifié comme appartenant à la classe 4 si aucun défaut électrique ne paraît se présenter, mais que ce fait n'est pas indubitablement identifiable.

9. Système selon la revendication 8, **caractérisé en ce que**, à un symptôme classifié dans la classe 1 est associée l'information de validation du symptôme "valide".

10. Système selon la revendication 8 ou 9, **caractérisé en ce que**, lors d'une classification d'un symptôme de défaut comme appartenant à la classe 3, l'information de validation du symptôme "valide" est associée au symptôme de défaut.

11. Système selon l'une quelconque des revendications 8 à 10, **caractérisé en ce que**, à un symptôme de défaut classifié dans la classe 2 ou dans la classe 4 est associée l'information de validation du symptôme "invalide" et **en ce que** la classe 3 est affichée en tant qu'information d'affichage associée à la classification.

12. Système selon l'une quelconque des revendications 8 à 11, **caractérisé en ce que**, lors d'une information de validation "invalide", il est possible de faire influencer la sortie de circuit d'excitation (10) concernée par l'unité de validation des symptômes (14), pour obtenir des informations supplémentaires au sujet du symptôme de défaut concerné.
